(19) Europäisches Patentamt
European Patent Office
Office européen des brevets

(11) **EP 2 827 281 B1**

(12) **EUROPEAN PATENT SPECIFICATION**

(45) Date of publication and mention of the grant of the patent:
**16.01.2019 Bulletin 2019/03**

(51) Int Cl.:
***G06K 9/00*** *(2006.01)*     ***G06K 9/46*** *(2006.01)*
***G06T 7/246*** *(2017.01)*

(21) Application number: **14169768.0**

(22) Date of filing: **26.05.2014**

(54) **Method for tracking characteristic points over a sequence of images, camera system and motor vehicle**

Verfahren zum Verfolgen von charakteristischen Punkten über eine Sequenz von Bildern, Kamerasystem und Kraftfahrzeug

Procédé de suivi des points caractéristiques sur une séquence d'images, système de caméra et véhicule à moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2013 DE 102013011843**

(43) Date of publication of application:
**21.01.2015 Bulletin 2015/04**

(73) Proprietor: **Connaught Electronics Ltd.**
**Tuam, County Galway (IE)**

(72) Inventors:
• **Hughes, Ciaran**
  **County Galway (IE)**
• **McDaid, Patrick**
  **County Kerry (IE)**
• **Kapsalas, Petros**
  **County Galway (IE)**
• **Horgan, Jonathan**
  **County Kerry (IE)**

(74) Representative: **Jauregui Urbahn, Kristian**
**Valeo Schalter und Sensoren GmbH**
**CDA-IP**
**Laiernstraße 12**
**74321 Bietigheim-Bissingen (DE)**

(56) References cited:
• **DAVID G LOWE: "Distinctive Image Features from Scale-Invariant Keypoints", INTERNATIONAL JOURNAL OF COMPUTER VISION, KLUWER ACADEMIC PUBLISHERS, BO, vol. 60, no. 2, 1 November 2004 (2004-11-01), pages 91-110, XP019216426, ISSN: 1573-1405, DOI: 10.1023/B:VISI.0000029664.99615.94**
• **BAY H ET AL: "Speeded-Up Robust Features (SURF)", COMPUTER VISION AND IMAGE UNDERSTANDING, ACADEMIC PRESS, US, vol. 110, no. 3, 1 June 2008 (2008-06-01), pages 346-359, XP022652944, ISSN: 1077-3142, DOI: 10.1016/J.CVIU.2007.09.014 [retrieved on 2007-12-15]**
• **DAVID GOSSOW ET AL: "Distinctive texture features from perspective-invariant keypoints", PATTERN RECOGNITION (ICPR), 2012 21ST INTERNATIONAL CONFERENCE ON, IEEE, 11 November 2012 (2012-11-11), pages 2764-2767, XP032329923, ISBN: 978-1-4673-2216-4**

EP 2 827 281 B1

## Description

In the image processing, methods are already known, which serve for tracking characteristic points or characteristic features of the imaged scene over a sequence of images. Presently, the interest is in particular directed to the provision of so-called "blob" images and thus to the detection of image regions differing from the remaining image region in various characteristics such as for example in the brightness or the color. Therein, an image region is referred to as a "blob", which considerably differs from the adjoining image region - for example in the brightness - and the pixels of which are identical at least within preset limits.

The invention is based on the prior art as it is described in the document David G. Lowe "Distinctive Image Features from Scale-Invariant Keypoints" (Computer Science Department, University of British Columbia, Vancouver, B.C. Canada). From this document, it is already known to extract characteristic points or features such as for example edges, corners and the like from a digital image and herein to provide a feature image consisting of the extracted characteristic points. First, a multiscale representation with a plurality of scale levels is generated from the digital image. In this regard, the digital image of the camera is scaled with different scale degrees such that several scaled images are provided. The mentioned feature image with characteristic points is generated to each scale level. The exact positions of the characteristic points within the three-dimensional space (two directions, x, y of the image frame and the scale direction) are determined with the aid of a second order Taylor series using the Hessian matrix. By the use of a non-maximum suppression filter, the dominant scale level can be found to each characteristic point.

In order to be able to track the characteristic points of the image over the sequence of frames, respective descriptive data is generated for each characteristic point, which is also known under the designation "descriptor". The provision of the descriptive data is effected such that this data is generated for the respective point only in the dominant scale level, i.e. in that scale level, in which the characteristic point has the greatest "strength". The descriptive data is therefore dependent on scale and thus allows tracking the characteristic point even if the scaling of the imaged scene changes during travel of the motor vehicle.

Furthermore, in the above mentioned document, it is proposed to generate the descriptive data of the respective characteristic points depending on a rotation of the image. Thus, the image is not only considered in the scale dimension, but additionally also in the rotational dimension. This in turn implies that the dominant rotation angle has to be found for each characteristic point, in order to be able to provide the rotation-dependent descriptive data at this dominant rotation angle. The descriptive data is therefore dependent on rotation and dependent on scale, and thus it is possible to track the characteristic points even if the imaged scene rotates by a certain angle. This is very computationally intensive and makes the tracking of the characteristic points in real time in particular in motor vehicles nearly impossible or requires powerful signal processors, which usually are not available in motor vehicles.

It is an object of the invention to demonstrate a solution, how in a method of the initially mentioned kind, the computational effort and thus the computing time in providing the descriptive data can be reduced compared to the prior art, wherein the reliability in tracking the characteristic points of the imaged environmental region of the motor vehicle is to be maintained at the same time.

According to the invention, this object is solved by a method as well as by a camera system and a motor vehicle having the features according to the respective independent claims. Advantageous implementations of the invention are the subject matter of the dependent claims, of the description and of the figures.

A method according to the invention serves for tracking or matching characteristic points over at least a first and a second image of an environmental region of a motor vehicle, wherein the images are provided by means of a camera of the motor vehicle and the following steps are performed to each image: a multiscale representation of the image with at least two scale levels is provided to each image. This means that the image is scaled with different scale factors and thus scaled images are generated. Then, a feature image is provided by extraction of characteristic points from the image in the respective scale level to each scale level. To each characteristic point, a dominant scale level for this point is found. To each characteristic point, descriptive data of the point is generated based on an image region around the point in the dominant scale level. This in particular means that the descriptive data is generated exclusively based on the scale level dominant for the respective point. The tracking of the characteristic points over the images involves that the characteristic points of the first image are each matched to a characteristic point of the second image based on the descriptive data.

In one embodiment, it can be provided that without rotation invariance of the descriptive data, the descriptive data is generated depending on scale, in particular exclusively depending on scale. This implies that the descriptive data of the characteristic points is generated independently of rotation of the points and thus generation is only dependent on the scaling. This embodiment is based on the realization that rotation of the imaged scene between the points of time of the capture of two images is negligible in the case where the scene has not changed drastically, i.e. during high frame rate and low rotational velocity. The orientation of the imaged scene with respect to the image frame therefore remains substantially similar such that the provision of rotation-invariant descriptive data can be omitted. Such an approach has the advantage that the computational effort and the computing time can be considerably reduced compared to the prior art, while the characteristic points can still be reliably tracked over the sequence of images. The tracking can also be performed in real time without having to employ powerful signal processors.

In an embodiment, it can be provided that the descriptive data of the respective characteristic point is generated based on an image region. The size of this image region is - for example - in a range of values from 16x16 pixels to 24x24 pixels. For example, the image region can have a size of 20x20 pixels. It has turned out that thus the descriptive data can be generated without much computational effort on the one hand and this data also allows reliable matching of the characteristic points of the first image to the characteristic points of the second image on the other hand.

In an embodiment, it can be provided that the generation of the descriptive data is performed based on the respective image region as follows: the image region can be subjected to convolution by means of a predetermined convolution matrix such that at least one gradient matrix is provided as the result of the convolution. The descriptive data can then be generated based on the at least one gradient matrix. Thus, reliable descriptive data can be provided, which individually and uniquely describes the environment of the respective characteristic point.

Preferably, a wavelet, in particular Haar wavelet or a morphological operator or a Prewitt operator or a Sobel operator, is used as the convolution matrix. In particular, it has turned out that the use of the Haar wavelet provides for high reliability of the descriptive data with relatively low computational effort.

In one embodiment, it can be provided that the image region around the respective point is divided in a plurality of partial regions - in particular of the same size - and to each partial region, at least one gradient matrix is each provided by convolution of the respective partial region in at least one direction. Thus, a plurality of gradient matrices is provided, and the descriptive data can be generated based on the gradient matrices of all of the partial regions. The division of the image region in the plurality of partial regions further reduces the computational effort, because the convolution only has to be performed over a smaller image region.

Preferably, overall two gradient matrices are provided for each partial region by convolution of the respective partial region in both directions (in x-direction as well as in y-direction of the image). The descriptive data can then be generated depending on both gradient matrices of all of the partial regions. The uniqueness of the descriptive data is therefore improved.

The generation of the descriptive data can be configured such that a descriptive vector with at least two vector components is respectively defined to each partial region, which are calculated based on the at least one gradient matrix of this partial region. The descriptive data can then be defined as an overall vector, which includes the vector components of the descriptive vectors of all of the partial regions. Thus, the overall vector is composed of combined vector components of the descriptive vectors of all of the partial regions. Such a representation of the descriptive data can be implemented without much effort and additionally ensures that the respective descriptive data of two characteristic points can be compared to each other with low computational effort.

Preferably, the descriptive vector of each partial region is formed of the following vector components:

- a first vector component as the sum of all of the components of a gradient matrix, which is provided by convolution of the partial region in a first direction (e. g. x-direction of the image frame), and/or
- a second vector component as the sum of all of the components of a gradient matrix, which is provided by convolution of the partial region in a second direction (e.g. y-direction), and/or
- a third vector component as the absolute value of the first vector component, and/or
- a fourth vector component as the absolute value of the second vector component.

If the mentioned vector components are used as the elements of the descriptive vector of each partial region, thus, descriptive data can overall be provided, which is highly individual and unique as well as descriptive for the respective characteristic point.

If all of the above mentioned vector components are used, thus, the descriptive vector of each partial region is composed of four vector components such that the size of the descriptive vector is 4. If 16 partial regions are now defined overall within the image region, thus overall 16 descriptive vectors result with each 4 vector components. If the components of all of the descriptive vectors are combined, thus, an overall vector with 64 components in turn results. This overall vector represents the descriptive data of the characteristic point.

One of the embodiments of the invention makes use of dimensionality reduction in order to reduce the computational effort required in matching the characteristic points, as the size of the descriptive data can be reduced. Moreover, in this way the feature representation is more flexible as the components of the feature space that provide the best discriminability can be pre-selected for the imaging use case.

In order to reduce the computational effort and the computing time in tracking the characteristic points, the size of the descriptive data, in particular of the mentioned overall vector, can be reduced. In this respect, the method of principal component analysis (PCA) and/or of linear discriminant analysis (LDA) has proven particularly advantageous. In this regard, the linear discriminant analysis is preferred, by means of which the descriptive data - in particular the mentioned overall vector - can be discriminated and thus compressed. Therein, the number of the vector components can for example be reduced from 64 to 48.

The extent of compression of the descriptive data is preferably dependent on the complexity or the structure of the imaged scene. If the imaged scene is relatively homogenous and thus little complex such that the scene has a relatively simple structure - for example the surface of the road - thus, a greater reduction of the size of the overall vector can be performed. In contrast, if the imaged structure is relatively complex, as it is for example the case with inhabited areas or with vegetation or plant formation, thus, a lower reduction of the size of the overall vector is preferably performed. Namely, with a complex structure of the imaged scene, more complex descriptive data also proves advantageous.

The tracking of the characteristic points over the sequence of images is effected in that the characteristic points of the first image are matched to the characteristic points of the second image based on the respective descriptive data. Therein, the characteristic points of the first image can be compared to the characteristic points of the second image with respect to the respective descriptive data. An additional reduction of the computing time results if exclusively points belonging to the same scale level or to immediately adjacent scale levels are compared to each other. For example, a characteristic point of the first image is therefore exclusively compared to those points of the second image, which have the same dominant scale level or in which the dominant scale level is one level higher or lower.

While matching the characteristic points of the first image to the characteristic points of the second image, the characteristic points can be classified: the characteristic points can be divided in a first group of points and a second group of points. The first group can include dark points on a bright background; the second group can include bright points on a dark background. The points of the first image can then be compared exclusively to those points of the second image belonging to the same group with respect to the descriptive data. Thus, the points of the first image are compared to the points of the second image with respect to the respective descriptive data exclusively within the two groups and thus group-specific, which additionally reduces the computational effort and the computing time of matching.

Preferably, so-called blob images are provided as the feature images, namely in particular using a Hessian matrix. The provision of the feature images and thus the extraction of characteristic points can therefore be performed in the same manner as it is described in the document David G. Lowe "Distinctive Image Features from Scale-Invariant Keypoints".

Therein, the exact positions of the characteristic points within the three-dimensional space are preferably determined with the aid of a second order Taylor series by performing an interpolation of the extracted points in three directions (x, y and scale direction). Then, maximums of the interpolation function can be found in order to determine the exact position of the characteristic points.

The dominant scale level for each characteristic point can again be performed using the non-maximum suppression filter. Therein, each point is compared to its 8 adjacent points of the same scale level and additionally also to the 9 points from the adjacent higher scale level as well as to the 9 points from the adjacent lower scale level.

It can also be provided that the number of the extracted characteristic points is affected and thus adjusted by corresponding adjustment of a threshold value. Therein, the relation applies that the lower the threshold value, the greater the number of the detected characteristic points. However, if a greater threshold value is set, thus, the number of the characteristic points can be reduced, which in particular provides for a more reliable and robust matching of the points and thus overall for stable results in tracking.

In addition, the invention relates to a camera system for a motor vehicle including a camera and an image processing device, which is formed for performing a method according to the invention.

A motor vehicle according to the invention includes a camera system according to the invention.

The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

There show:

Fig. 1    in schematic illustration a motor vehicle with a camera system according to an embodiment of the invention;

Fig. 2    a flow diagram of a method according to an embodiment of the invention;

Fig. 3    an exemplary multiscale representation of an image; and

Fig. 4    a schematic illustration for explaining the generation of descriptive data to a characteristic point of an image.

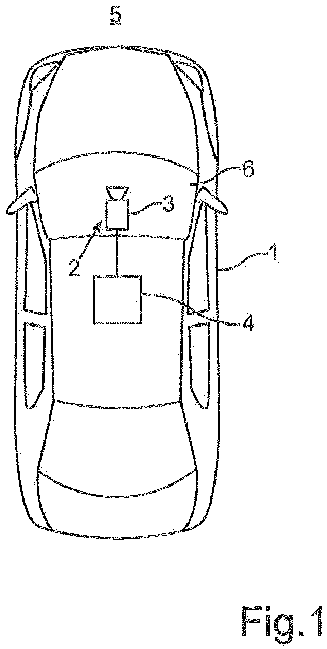

A motor vehicle 1 illustrated in Fig. 1 is for example a passenger car. The motor vehicle 1 includes a camera system 2 with a camera 3 and an electronic image processing device 4 electrically coupled to the camera 3. Optionally, the image processing device 4 can also be integrated in the camera 3. For example, the image processing device 4 includes a digital signal processor (DSP) formed for processing image data.

The arrangement and the orientation of the camera 3 are only exemplarily illustrated in Fig. 1. As shown in Fig. 1, the camera 3 captures an environmental region 5 in front of the motor vehicle 1 and is disposed behind a windshield 6 in the embodiment. However, any positions of the camera 3 on the motor vehicle 1 are possible, for example, the camera 3 can be disposed on a bumper or it can be integrated in an exterior mirror. Multiple cameras 3 can also be provided on the motor vehicle 1.

Preferably, the camera 3 is a video camera providing a plurality of images of the environmental region 5. This means that the camera 3 provides a temporal sequence of images and communicates it to the image processing device 4. The camera 3 can include a CCD image sensor or a CMOS image sensor. An opening angle and thus a capturing angle of the camera 3 can for example be in a range of values from 90° to 200°.

The image processing device 4 can detect characteristic points of the imaged scene 5 in the captured images and track these points over the sequence of images. For example, this can serve for tracking obstacles located in the environmental region 5. Additionally or alternatively, the ego motion of the motor vehicle 1 can also be determined based on the tracked characteristic points. Such methods are already prior art.

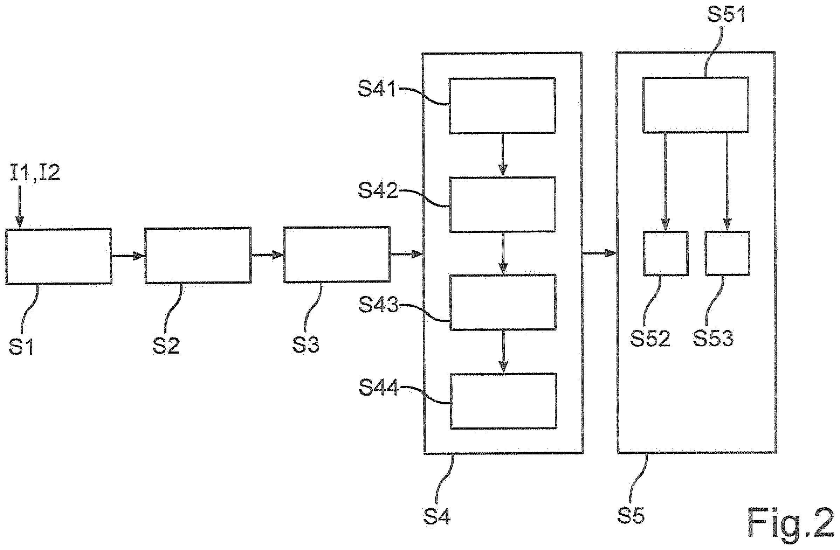

In Fig. 2, a flow diagram of a method is illustrated, which serves for tracking characteristic points of an image. Therein, the characteristic points are tracked over the sequence of images. For the sake of simplicity, the method is only explained with respect to two consecutive images 11, 12, in which the characteristic points are detected and matched to each other.

The method begins with the capture of a first and a second image I1, I2, which are received by the image processing device 4. Then, the following steps are performed to each image I1, I2:

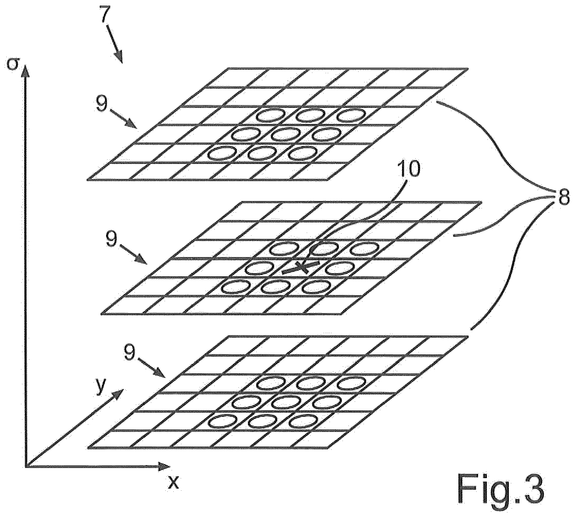

From each image I1, I2, first, according to step S1, a multiscale representation 7 with a plurality of scale levels 8 is generated, as they are exemplarily and schematically illustrated in Fig. 3. Thus, a three-dimensional space with an x-direction, a y-direction as well as a scale direction σ arises. Therein, the x-y-plane is the image plane. For example, four scale levels 8 can be implemented here, wherein the number of the scale levels 8 basically can be arbitrarily set.

The provision of the multiscale representation 7 implies that the image I1, I2 is seated with different scale degrees and thus several scaled images are generated. In a further step S2, a feature image 9 is generated to each scale level 8 by extracting characteristic points in the respective scale level 8 from the image I1, I2. Preferably, so-called blob images (see also Wikipedia "blob detection") are generated. For example, this can be implemented with the aid of a Hessian matrix in order to approach the Laplacian response as it is described in the document Herbert Bay, Andreas Ess, Tinne Tuytelaars, Luc Van Gool "SURF: Speeded Up Robust Features", Computer Vision and Image Understanding (CVIU), Vol. 110, No. 3, pp. 346--359, 2008. In order to determine the exact position of the characteristic points in the three-dimensional space x, y, σ, interpolation of the detected points in all of the three directions x, y, Sigma can be performed. To this, a Taylor function can be used, as it is demonstrated in the mentioned document:

$$H(x) = H + \frac{\partial H^T}{\partial x} x + \frac{1}{2} x^T \frac{\partial^2 H}{\partial x^2} x,$$

wherein H denotes the Hessian matrix and $x = (x,y,\sigma)^T$.

The maximums and thus the exact position of the points can be determined by setting the derivation of the Taylor series to zero:

$$\hat{x} = -\frac{\partial^2 H^{-1}}{\partial x^2} \frac{\partial H}{\partial x}.$$

In order to detect the local maximums and minimums of the multiscale representation 7, each point 10 (Fig. 3) is compared to the eight adjacent points of the same scale level 8 as well as to the nine adjacent points from the adjacent higher as well as from the adjacent lower scale level 8. This point 10 is only selected if its value is higher than the values of the twenty-six adjacent points.

In a further step S3, stability criteria for the extraction of the extremes in the three-dimensional space x, y, σ can be defined. For example, a threshold value can be defined, by means of which the number of the detected characteristic points is affected.

In each scale level 8, thus, a feature image 9 with a plurality of characteristic points is generated. Descriptive data is generated to the characteristic points, based on which the matching of the characteristic points of the two images I1, I2 is performed. The generation of the descriptive data is effected in a step S4 according to Fig. 2. Within the scope of this step S4, the following steps are performed:

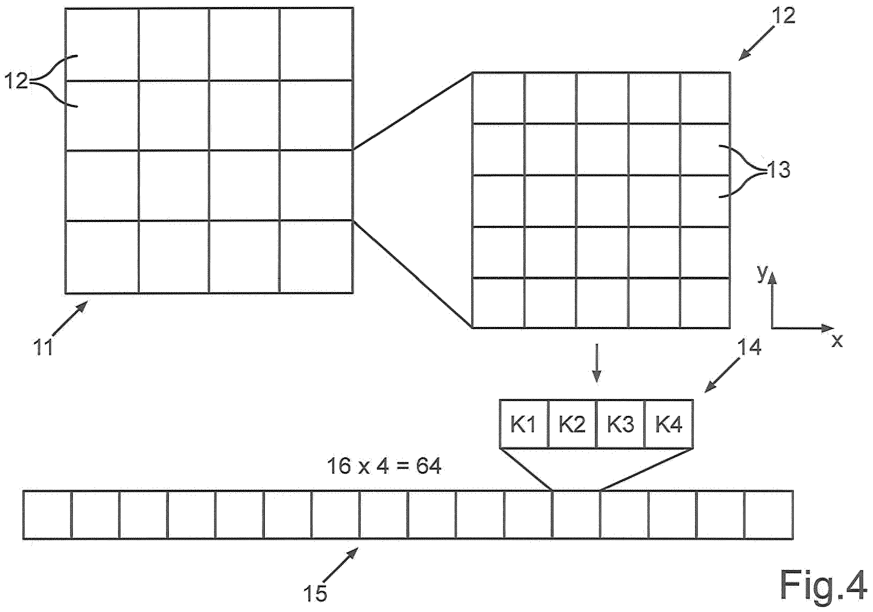

According to step S41, an image region 11 around the characteristic point is defined to each characteristic point, as it is schematically shown in Fig. 4. For example, the image region 11 has a size of 20x20 pixels and is divided in 16 and thus 4x4 partial regions 12 of the same size. The partial regions 12 all have a size of 5x5 pixels 13. According to step S42, a descriptive vector 14 is generated to each partial region 12, which includes four vector components K1, K2, K3, K4. In order to generate the descriptive vector 14, the partial region 12 is convolved by means of a convolution matrix both in x-direction and in y-direction. Thus, overall two gradient matrices are provided as results of the convolution to each partial region 12. For example, the Haar wavelet is used as the convolution matrix. Then, each gradient matrix has a size of 5x5.

The vector components K1, K2, K3, K4 are calculated as follows: as the first vector component K1, a sum of the components of the gradient matrix is calculated, which is provided by convolution of the partial region 12 in x-direction. As the second vector component K2, a sum of the components of the gradient matrix is calculated, which is generated by convolution of the partial region 12 in y-direction. The third vector component K3 is an absolute value of the first vector component K1 and the fourth vector component K4 is an absolute value of the second vector component K2.

If such a descriptive vector 14 is generated for all of the partial regions 12 of the image region 11, thus, in a further step S43, all of the descriptive vectors 14 are combined to an overall vector 15. The overall vector 15 thus is composed of 16 x 4 = 64 vector components.

The overall vector 15 represents the descriptive data of the characteristic point. In order to enhance the discriminability of the feature points within the feature space, in a further step S44, a reduction of the size of the overall vector 15 can be performed. For this purpose, the linear discriminant analysis (LDA) is used, and the size of the overall vector 15 can for example be reduced from 64 to 48. This reduction can also be performed depending on the complexity of the structure of the imaged scene and thus of the environment 5. If the imaged scene has a relatively complex structure, a longer overall vector 15 can be provided. If the complexity of the scene is relatively low and the scene is therefore uniform, a greater reduction can be performed.

The overall vector 15 is generated to each characteristic point in its dominant scale level 8. This means that the dominant scale level 8 is found to each characteristic point, which can for example be performed by means of the non-maximum suppression method. Thus, the overall vector 15 is dependent on scale. However, it is independent of a rotation of the feature images 9 because it can be assumed in the motor vehicle 1, that the scene does not rotate significantly during the movement. Thus, rotation invariance of the descriptive vectors 14 and of the overall vector 15 is omitted. Therefore, the computing time is again considerably reduced compared to the prior art, such that implementation of the tracking of the points in real time is allowed.

If characteristic points as well as their descriptive data are present both to the first image I1 and to the second image I2, thus, in a further step S5 according to Fig. 2, the matching of the characteristic points of the first image I1 to the characteristic points of the second image I2 is effected based on the respective overall vectors 15. Within the scope of this step S5, first, the characteristic points are classified and thus divided in two groups according to step S51. The dark points on a bright background (dark blobs) are combined to a first group, while the bright points on a dark background (bright blobs) are combined to a second group. Then, the characteristic points are compared to each other in group-specific manner such that in a step S52, the points within the first group are compared to each other, and in a step S53, the points within the second group are compared to each other. In order to further reduce the computing time, the points are exclusively compared to those points, which belong to the same scale level 8 or the dominant scale level 8 of which is one level higher or lower. Therein, the comparison of the points is effected with respect to the overall vectors 15 such that the respective overall vectors 15 are compared to each other. Herein, for example, a correlation can be calculated.

## Claims

1. Method for matching characteristic points over at least a first and a second image (I1, I2) of an environmental region (5) of a motor vehicle (1), wherein the images (11, 12) are provided by means of a camera (3) of the motor vehicle (1), and to each image (I1, I2), the following steps are performed by means of an electronic image processing device (4):

   - providing a multiscale representation (7) of the image (I1, I2) with at least two scale levels (8),
   - to each scale level (8), providing a feature image (9) by extracting characteristic points from the image (I1, I2) in the respective scale level (8),
   - to each characteristic point, finding a dominant scale level (8) for the point, and
   - to each characteristic point, generating respective descriptive data (15) of the point based on an image region (11) around the point in the dominant scale level (8),

   wherein the characteristic points of the first image (I1) are each matched to a characteristic point of the second image (I2) based on the respective descriptive data (15),
   **characterized in that**
   without rotation adaptation of the descriptive data (15), the descriptive data (15) is generated based on the multiscale representation (7) while the generation of the descriptive data (15) based on the respective image region (11) includes that the image region (11) is subjected to convolution by means of a predetermined convolution matrix and herein at least one gradient matrix is provided as the result of the convolution, wherein the descriptive data (15) is generated based on the at least one gradient matrix and the image region (11) is divided in a plurality of partial regions (12) and to each partial region (12) at least one gradient matrix is respectively provided by convolution of the respective partial region (12) in at least one direction, wherein the descriptive data (15) is generated depending on the gradient matrices of all of the partial regions (12)

wherein the matching of the characteristic points of the first image (I1) to the characteristic points of the second image (I2) includes that the characteristic points of the first and the second image (I1, I2) are divided in a first group of dark points on a bright background and a second group of bright points on a dark background, wherein the points of the first image (I1) are compared to the points of the second image (I2) with respect to the respective descriptive data (15) exclusively within the same group.

2. Method according to claim 1,
**characterized in that**
the descriptive data (15) of the respective point is generated based on an image region (11), in particular the size of which is in a range of values from 16 x 16 pixels (13) to 24 x 24 pixels (13), in particular is 20 x 20 pixels (13).

3. Method according to claim 2,
**characterized in that**
as the convolution matrix, a wavelet, in particular Haar wavelet, or a morphological operator or a Prewitt operator or a Sobel operator is used.

4. Method according to claim 3,
**characterized in that**
to each partial region (12), two gradient matrices are provided by convolution of the respective partial region (12) in both directions (x, y).

5. Method according to claim 4,
**characterized in that**
to each partial region (12), a descriptive vector (14) with at least two vector components (K1, K2, K3, K4) is respectively defined and the descriptive data (15) is defined as an overall vector (15), which includes the vector components (K1, K2, K3, K4) of the descriptive vectors (14) of all of the partial regions (12).

6. Method according to claim 5,
**characterized in that**
the descriptive vector (14) of each partial region (12) is formed of the following vector components (K1, K2, K3, K4):

  - a first vector component (K1, K2, K3, K4) as the sum of all of the components of a gradient matrix, which is provided by convolution of the partial region (12) in a first direction, and/or
  - a second vector component (K1, K2, K3, K4) as the sum of all of the components of a gradient matrix, which is provided by convolution of the partial region (12) in a second direction, and/or
  - a third vector component (K1, K2, K3, K4) as the absolute value of the first vector component (K1, K2, K3, K4), and/or
  - a fourth vector component (K1, K2, K3, K4) as the absolute value of the second vector component (K1, K2, K3, K4).

7. Method according to any one of the preceding claims,
**characterized in that**
the descriptive data (15), in particular the overall vector, is compressed by means of a method of principal component analysis and/or linear discriminant analysis.

8. Method according to any one of the preceding claims,
**characterized in that**
the matching of the characteristic points of the first image (I1) to the characteristic points of the second image (I2) based on the respective descriptive data (15) includes that the characteristic points of the first image (I1) are compared to the characteristic points of the second image (I2) with respect to the respective descriptive data (15), wherein exclusively points are compared to each other, which belong to the same scale level (8) or to immediately adjacent scale levels (8).

9. Method according to any one of the preceding claims,
**characterized in that**
as the feature images (9), blob images are provided, in particular using a Hessian matrix (H).

10. Method according to any one of the preceding claims,
**characterized in that**
finding the dominant scale level (8) for each characteristic point is effected using a non-maximum suppression filter.

11. Camera system (2) for a motor vehicle (1) including a camera (3) for providing a sequence of images (I1, I2) of an environmental region (5) of the motor vehicle (1), and including an electronic image processing device (4), which is adapted to perform a method according to any one of the preceding claims.

12. Motor vehicle (1) including a camera system (2) according to claim 11.

**Patentansprüche**

1. Verfahren zum Abgleichen von charakteristischen Punkten über wenigstens ein erstes und ein zweites Bild (I1, I2) eines Umgebungsbereichs (5) eines Kraftfahrzeugs (1), wobei die Bilder (I1, I2) mittels einer Kamera (3) des Kraftfahrzeugs (1) bereitgestellt werden und wobei an jedem Bild (I1, I2) die folgenden Schritte mithilfe einer elektronischen Bildverarbeitungsvorrichtung (4) durchgeführt werden:

- Bereitstellen einer mehrskaligen Darstellung (7) des Bildes (I1, I2) mit wenigstens zwei Skalenebenen (8),
- zu jeder Skalenebene (8), Bereitstellen eines Merkmalbildes (9), indem charakteristische Punkte aus dem Bild (I1, I2) auf der jeweiligen Skalenebene (8) extrahiert werden,
- zu jedem charakteristischen Punkt, Finden einer dominanten Skalenebene (8) für den Punkt, und
- zu jedem charakteristischen Punkt, Erzeugen jeweiliger beschreibender Daten (15) des Punktes basierend auf einem Bildbereich (11) rund um den Punkt auf der dominanten Skalenebene (8),

wobei die charakteristischen Punkte des ersten Bildes (I1) jeweils mit einem charakteristischen Punkt des zweiten Bildes (I2) abgeglichen werden, basierend auf den jeweiligen beschreibenden Daten (15), **dadurch gekennzeichnet, dass**
ohne Rotationsanpassung der beschreibenden Daten (15) die beschreibenden Daten (15) basierend auf der mehrskaligen Darstellung (7) erzeugt werden, während die Erzeugung der beschreibenden Daten (15) basierend auf dem jeweiligen Bildbereich (11) beinhaltet, dass der Bildbereich (11) einer Faltung mittels einer vorbestimmten Faltmatrix unterzogen wird, und wobei wenigstens eine Gradientenmatrix als Ergebnis der Faltung bereitgestellt wird, wobei die beschreibenden Daten (15) basierend auf wenigstens einer Gradientenmatrix erzeugt werden, und
der Bildbereich (11) in mehrere Teilbereiche (12) unterteilt ist und zu jedem Teilbereich (12) wenigstens jeweils eine Gradientenmatrix durch Faltung des jeweiligen Teilbereichs (12) in wenigstens eine Richtung bereitgestellt wird, wobei die beschreibenden Daten (15) in Abhängigkeit von den Gradientenmatrizen aller Teilbereiche (12) erzeugt werden, wobei das Abgleichen der charakteristischen Punkte des ersten Bildes (I1) mit den charakteristischen Punkten des zweiten Bildes (I2) beinhaltet, dass die charakteristischen Punkte des ersten und des zweiten Bildes (I1, I2) in ein erste Gruppe mit dunklen Punkten vor einem hellen Hintergrund und eine zweite Gruppe mit hellen Punkten vor einem dunklen Hintergrund unterteilt sind, wobei die Punkte des ersten Bildes (I1) mit den Punkten des zweiten Bildes (I2) in Bezug auf die jeweiligen beschreibenden Daten (15) ausschließlich innerhalb derselben Gruppe verglichen werden.

2. Verfahren nach Anspruch 1,
**dadurch gekennzeichnet, dass**
die beschreibenden Daten (15) des jeweiligen Punktes basierend auf einem Bildbereich (11) erzeugt werden, dessen Größe insbesondere in einem Wertebereich von 16x16 Bildpunkte (13) bis 24x24 Bildpunkte (13) liegt und insbesondere 20x20 Bildpunkte (13) beträgt.

3. Verfahren nach Anspruch 2,
**dadurch gekennzeichnet, dass**
als Faltmatrix ein Wavelet, insbesondere ein Haar-Wavelet, oder ein morphologischer Operator oder ein Prewitt-Operator oder ein Sobel-Operator verwendet wird.

4. Verfahren nach Anspruch 3,
**dadurch gekennzeichnet, dass**
zu jedem Teilbereich (12) zwei Gradientenmatrizen durch Faltung des jeweiligen Teilbereichs (12) in beide Richtungen (x, y) bereitgestellt werden.

5. Verfahren nach Anspruch 4,
**dadurch gekennzeichnet, dass**
zu jedem Teilbereich (12) jeweils ein beschreibender Vektor (14) mit wenigstens zwei Vektorkomponenten (K1, K2, K3, K4) definiert ist und die beschreibenden Daten (15) als übergeordneter Vektor (15) definiert sind, der die Vektorkomponenten (K1, K2, K3, K4) der beschreibenden Vektoren (14) aller Teilbereiche (12) beinhaltet.

6. Verfahren nach Anspruch 5,
**dadurch gekennzeichnet, dass**
der beschreibende Vektor (14) jedes Teilbereichs (12) aus den folgenden Vektorkomponenten (K1, K2, K3, K4) gebildet wird:

- eine erste Vektorkomponente (K1, K2, K3, K4) als Summe aller Komponenten einer Gradientenmatrix, die durch die Faltung des Teilbereichs (12) in einer ersten Richtung bereitgestellt wird, und/oder
- eine zweite Vektorkomponente (K1, K2, K3, K4) als Summe aller Komponenten einer Gradientenmatrix, die durch die Faltung des Teilbereichs (12) in einer zweiten Richtung bereitgestellt wird, und/oder
- eine dritte Vektorkomponente (K1, K2, K3, K4) als Absolutwert der ersten Vektorkomponente (K1, K2, K3, K4), und/oder
- eine vierte Vektorkomponente (K1, K2, K3, K4) als Absolutwert der zweiten Vektorkomponente (K1, K2, K3, K4) .

7. Verfahren nach einem der vorhergehenden Ansprüche,
**dadurch gekennzeichnet, dass**

die beschreibenden Daten (15), insbesondere der übergeordnete Vektor, mittels eines Verfahrens der Hauptkomponenten-Analyse und/oder der linearen Trennanalyse komprimiert werden.

8. Verfahren nach einem der vorhergehenden Ansprüche,
**dadurch gekennzeichnet, dass**
das Abgleichen der charakteristischen Punkte des ersten Bildes (I1) mit den charakteristischen Punkten des zweiten Bildes (I2) basierend auf den jeweiligen beschreibenden Daten (15) beinhaltet, dass die charakteristischen Punkte des ersten Bildes (I1) mit den charakteristischen Punkten des zweiten Bildes (I2) in Bezug auf die jeweiligen beschreibenden Daten (15) verglichen werden, wobei ausschließlich Punkte miteinander verglichen werden, die derselben Skalenebene (8) oder unmittelbar angrenzenden Skalenebenen (8) angehören.

9. Verfahren nach einem der vorhergehenden Ansprüche,
**dadurch gekennzeichnet, dass**
als Merkmalbilder (9) werden Blob-Bilder bereitgestellt, insbesondere unter Verwendung einer Hesse-Matrix (H).

10. Verfahren nach einem der vorhergehenden Ansprüche,
**dadurch gekennzeichnet, dass**
das Finden der dominanten Skalenebene (8) für jeden charakteristischen Punkt unter Verwendung eines Nicht-Maxima-Unterdrückungsfilters bewirkt wird.

11. Kamerasystem (2) für ein Kraftfahrzeug (1), das eine Kamera (3) aufweist, um eine Folge von Bildern (I1, I2) eines Umgebungsbereichs (5) des Kraftfahrzeugs (1) bereitzustellen, und das eine elektronische Bildverarbeitungsvorrichtung (4) aufweist, die dafür ausgelegt ist, ein Verfahren nach einem der vorhergehenden Ansprüche durchzuführen.

12. Kraftfahrzeug (1), das ein Kamerasystem (2) nach Anspruch 11 aufweist.

## Revendications

1. Procédé pour mettre en correspondance des points caractéristiques sur au moins une première et une seconde image (I1, I2) d'une région des environs (5) d'un véhicule à moteur (1), les images (I1, I2) étant fournies au moyen d'une caméra (3) du véhicule à moteur (1), et à chaque image (I1, I2), les étapes suivantes étant effectuées au moyen d'un dispositif de traitement d'image électronique (4) :

- en fournissant une représentation multi-échelle (7) de l'image (I1, I2) avec au moins deux niveaux d'échelle (8),
- à chaque niveau d'échelle (8), en fournissant une image caractéristique (9) par extraction de points caractéristiques de l'image (I1, I2) dans le niveau d'échelle respectif (8),
- à chaque point caractéristique, en trouvant un niveau d'échelle dominant (8) pour le point, et
- à chaque point caractéristique, en générant des données descriptives respectives (15) du point sur la base d'une région d'image (11) autour du point dans le niveau d'échelle dominant (8),

les points caractéristiques de la première image (I1) étant chacun mis en correspondance avec un point caractéristique de la seconde image (I2) sur la base des données descriptives respectives (15),
**caractérisé en ce que** :

sans adaptation de rotation des données descriptives (15), les données descriptives (15) sont générées sur la base de la représentation multi-échelle (7) tandis que la génération des données descriptives (15) sur la base de la région d'image respective (11) comprend que la région d'image (11) est soumise à une convolution au moyen d'une matrice de convolution prédéterminée et au moins une matrice de gradient est fournie comme le résultat de la convolution, les données descriptives (15) étant générées sur la base de l'au moins une matrice de gradient et la région d'image (11) est divisée en une pluralité de régions partielles (12) et à chaque région partielle (12) au moins une matrice de gradient est respectivement fournie par convolution de la région partielle respective (12) dans au moins une direction, les données descriptives (15) étant générées en fonction des matrices de gradient de toutes les zones partielles (12)
la mise en correspondance des points caractéristiques de la première image (I1) avec les points caractéristiques de la seconde image (I2) comprenant que les points caractéristiques de la première et de la seconde image (I1, I2) sont divisés dans un premier groupe de points sombres sur un fond clair et un second groupe de points brillants sur un fond sombre, les points de la première image (I1) étant comparés aux points de la seconde image (I2) par rapport aux données descriptives respectives (15) exclusivement dans le même groupe.

2. Procédé selon la revendication 1, **caractérisé en ce que**
les données descriptives (15) du point respectif sont générées sur la base d'une région d'image (11), en particulier dont la taille est dans une plage de valeurs de 16 x 16 pixels (13) à 24 x 24 pixels (13), en particulier de 20 x 20 pixels (13).

3.  Procédé selon la revendication 2, **caractérisé en ce que**, en tant que matrice de convolution, une ondelette, en particulier une ondelette de Haar, ou un opérateur morphologique ou un opérateur de Prewitt ou un opérateur de Sobel est utilisé.

4.  Procédé selon la revendication 3, **caractérisé en ce que**, pour chaque région partielle (12), deux matrices de gradient sont fournies par convolution de la région partielle respective (12) dans les deux directions (x, y).

5.  Procédé selon la revendication 4, **caractérisé en ce que**, pour chaque région partielle (12), un vecteur descriptif (14) avec au moins deux composantes vectorielles (K1, K2, K3, K4) est respectivement défini et les données descriptives (15) sont définies comme un vecteur global (15), qui comprend les composantes de vecteur (K1, K2, K3, K4) des vecteurs de description (14) de toutes les régions partielles (12).

6.  Procédé selon la revendication 5, **caractérisé en ce que** le vecteur descriptif (14) de chaque région partielle (12) est formé des composantes vectorielles suivantes (K1, K2, K3, K4) :

    une première composante vectorielle (K1, K2, K3, K4) comme la somme de toutes les composantes d'une matrice de gradient, qui est fournie par convolution de la région partielle (12) dans une première direction, et/ou
    une deuxième composante vectorielle (K1, K2, K3, K4) comme la somme de toutes les composantes d'une matrice de gradient, qui est fournie par convolution de la région partielle (12) dans une deuxième direction, et/ou
    une troisième composante vectorielle (K1, K2. K3, K4) comme la valeur absolue de la première composante vectorielle (K1, K2, K3, K4) et/ou
    une quatrième composante vectorielle (K1, K2, K3, K4) comme la valeur absolue de la deuxième composante vectorielle (K1, K2, K3, K4).

7.  Procédé selon l'une quelconque des revendications précédentes, **caractérisé en ce que**
    les données descriptives (15), en particulier le vecteur global, est compressé au moyen d'un procédé d'analyse de composant principal et/ou d'analyse discriminante linéaire.

8.  Procédé selon l'une quelconque des revendications précédentes, **caractérisé en ce que** la mise en correspondance des points caractéristiques de la pre-

mière image (I1) aux points caractéristiques de la seconde image (I2) sur la base des données descriptives respectives (15) comprend que les points caractéristiques de la première image (I1) sont comparés aux points caractéristiques de la seconde image (I2) par rapport aux données descriptives respectives (15), des points étant exclusivement comparés les uns aux autres, qui appartiennent au même niveau d'échelle (8) ou à des niveaux d'échelle immédiatement adjacents (8).

9.  Procédé selon l'une quelconque des revendications précédentes, **caractérisé en ce que**, en tant qu'images caractéristiques (9), des images de tache sont fournies, en particulier à l'aide d'une matrice hessienne (H).

10. Procédé selon l'une quelconque des revendications précédentes, **caractérisé en ce que** l'étape consistant à trouver le niveau d'échelle dominant (8) pour chaque point caractéristique est effectuée à l'aide d'un filtre de suppression non maximal.

11. Système de caméra (2) pour un véhicule à moteur (1) comprenant une caméra (3) pour fournir une séquence d'images (I1, I2) d'une région des environs (5) du véhicule à moteur (1), et comprenant un dispositif de traitement d'image électronique (4), qui est adapté pour mettre en oeuvre un procédé selon l'une quelconque des revendications précédentes.

12. Véhicule à moteur (1) comprenant un système de caméra (2) selon la revendication 11.

Fig.1

Fig.2

Fig.3

16 x 4 = 64

K1 | K2 | K3 | K4

Fig.4

EP 2 827 281 B1

**EP 2 827 281 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID G. LOWE.** Distinctive Image Features from Scale-Invariant Keypoints. Computer Science Department

- **HERBERT BAY ; ANDREAS ESS ; TINNE TUYTELAARS ; LUC VAN GOOL.** SURF: Speeded Up Robust Features. *Computer Vision and Image Understanding (CVIU),* 2008, vol. 110 (3), 346-359